# EUROPÄISCHE PATENTSCHRIFT

(11) **EP 1 263 065 B1**
(45) Veröffentlichungstag und Bekanntmachung des Hinweises auf die Patenterteilung: **04.08.2004**
(21) Anmeldenummer: 02010239.8
(22) Anmeldetag: 16.05.2002
(51) Int. Cl.: H01M 8/02, H01M 2/08

(54) **Verwendung von zu degradationsstabilen Siliconkautschuken vernetzbaren Massen als Dichtungsmassen in Brennstoffzellen.**
Use of crosslinkable silicone rubbers, stable against degradation as sealants in fuel cells
Emploi de caoutchoucs de silicone réticulables,stable à la dégradation comme materiaux d'étanchéité dans des piles à combustible

(30) Priorität: 23.05.2001 DE 10125360
(43) Veröffentlichungstag der Anmeldung: 04.12.2002
(73) Patentinhaber: Wacker-Chemie GmbH, 81737 München (DE)
(72) Erfinder: Sixt, Torsten, Dr., 84489 Burghausen (DE); Bosch, Erhard, Dr., 84543 Winhöring (DE); Häring, Martina, 84489 Burghausen (DE); Schütt, Wolfgang, Dr., 85375 Neufahrn bei Freising (DE)
(74) Vertreter: Deffner-Lehner, Maria, Dr.

(56) Entgegenhaltungen:
- EP-A- 0 933 826
- WO-A-00/64995
- DE-A- 19 634 971
- DE-A- 19 829 142
- DATABASE CA [Online] CHEMICAL ABSTRACTS SERVICE, COLUMBUS, OHIO, US; MIYAKAWA, TOMOSHIGE ET AL: "Seals for solid polymer fuel cell separators" retrieved from STN Database accession no. 133:91956 CA XP002212166 -& JP 2000 188118 A (MITSUBISHI PLASTICS INDUSTRIES, LTD., JAPAN) 4. Juli 2000 (2000-07-04) -& PATENT ABSTRACTS OF JAPAN vol. 2000, no. 10, 17. November 2000 (2000-11-17) & JP 2000 188118 A (MITSUBISHI PLASTICS INDUSTRIES LTD), 4. Juli 2000 (2000-07-04)
- PATENT ABSTRACTS OF JAPAN vol. 2000, no. 06, 22. September 2000 (2000-09-22) -& JP 2000 077084 A (MITSUBISHI PLASTICS IND LTD), 14. März 2000 (2000-03-14)

## Beschreibung

Die Erfindung betrifft die Verwendung von zu Silicon-Elastomeren vernetzbaren Massen als Dichtungsmassen in Brennstoffzellen oder Brennstoffzellenstapeln.

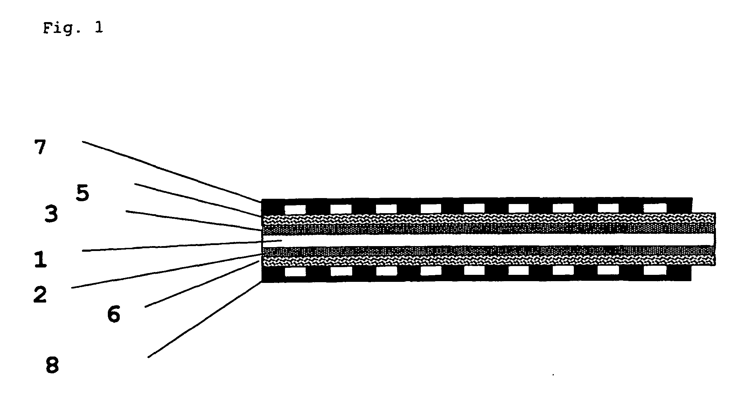

Brennstoffzellen mit Polymerelektrolytmembranen (PEM) bzw. Stapeln (stacks) aus variabler Anzahl von Brennstoffzellen werden gewöhnlich zur Erzeugung von elektrischem Strom aus einem Brenngas und einem Oxidanten herangezogen. Sie enthalten eine Anode, eine Kathode und dazwischen liegend eine Ionenaustauschmembran. Auf der Membran (1) sind beidseitig katalytisch aktive Schichten aufgebracht (2,3) (z,B. US 6,020,083). Zwischen dieser Membran-Elektroden-Einheit (MEA) und den Bipolarplatten (7,8) muss ein gasdichter Raum ausgebildet werden, oft auch als Gasdiffusionsschichten aus gasdurchlässigen, porösen Materialien (5,6) z.B. Graphitpapier oder -flies (WO 98/50973), die eine gleichmäßige Gasverteilung sicherstellen (siehe Fig. 1).

Für den Betrieb der Zellen oder Stacks ist es notwendig, die gasführenden Schichten nach außen abzudichten. Es ist bekannt, je nach Bauform der Zellen, dazu Elastomere und diverse Kunststoffe zu verwenden, die entweder als vulkanisierbare Massen oder als vorgeformte Dichtung eingesetzt werden. Sollen auch Gasdiffusionsschichten abgedichtet werden, dann sind vulkanisierbare Elastomere notwendig, die in das poröse Material eindringen können, dieses verschließen und gleichzeitig bei dem Aufbau eines Stacks eine Funktion als Dichtung erfüllen. Gemäß WO 00/54352 werden Elastomere direkt an die MEA/GDL-Einheit (GDL = Gas diffusion layer) angegossen oder angespritzt. Diese Anordnung wird zwischen die Bipolarplatten mit den Gasverteilungskanälen eingebracht; durch mechanische Verpressung bei der Montage der Brennstoffzellen-Stacks erfolgt die Abdichtung.

Für die bisher beschriebenen Brennstoffzellen-Abdichtungen werden Thermoplaste (PP, PE, PA) und Elastomere wie fluorierte Elastomere (US 6,020,083), Silicone (WO 00/54352, DE-A 19829142, WO 00/35038) und andere, beispielsweise olefinische Kautschuke, wie Ethylenpropylenkautschuk, Acrylkautschuk, Butylkautschuk, halogenierter Butylkautschuk oder hydrierter Nitrilkautschuk (EP-A 933826) verwendet. Darüber hinaus können auch Epoxidharze (WO 98/33225) Verwendung finden.

Die bisher verwendeten Materialien haben Nachteile wie hohe Kosten (Fluorelastomere), ungünstige Vernetzungsparameter (olefinische Kautschuke) oder ungenügende Resistenz gegenüber den in der Brennstoffzelle vorherrschenden Bedingungen. Dazu zählen Hitzebeständigkeit bis etwa 150°C, Beständigkeit gegenüber durch Befeuchtung wassergesättigte Gase (Wasserstoff/Druckluft bzw. Sauerstoff), Druckbeständigkeit aufgrund der Arbeitsdrücke in Brennstoffzellen bis zu 3 bar und Säurebeständigkeit aufgrund azider Bedingungen an der Grenzschicht zur Polymermembran. Silicondichtstoffe sind unter diesen Bedingungen im Vorteil. Die Verwendung von feuchtigkeitsvulkanisierenden RTV-1-Systemen weist bezüglich der Taktzeit Nachteile auf, kondensationsvernetzende RTV-2-Systeme zeigen ihre Nachteile vor allem in langen Topfzeiten und Reversionsneigung. Dem Vorteil additionsvernetzender Silikonmassen hinsichtlich Taktzeit oder Reversion stehen Probleme wie vor allem Degradation während des Betriebs der Brennstoffzellen entgegen. Diese äußern sich in Weißverfärbung, Trübung, Blasenbildung und Porosität. In DE-A 196 34 971 bzw. der korrespondierenden US 5,977,249 ist ein Flüssigsiliconkautschuk mit verbessertem Druckverformungsrest auf der Basis einer additionsvernetzenden Siliconmasse beschrieben, die eine organische Schwefelverbindung enthält.

Es bestand die Aufgabe, zu Elastomeren vernetzbare Massen zur Verfügung zu stellen, mit denen die oben beschriebenen Nachteile vermieden werden, die insbesondere unter den Betriebsbedingungen von Brennstoffzellen, wie Brennstoffzellen mit Polymerelektrolytmembranen, dauerhaft degradationsstabil sind, die typischen Verarbeitungsmöglichkeiten von niederviskosen Dichtmassen, wie Spritzgießen (Liquid Injection), haben und gleichzeitig eine zuverlässige Abdichtung ermöglichen. Die Aufgabe wird durch die Erfindung gelöst.

Gegenstand der Erfindung ist Verwendung von zu Elastomeren vernetzbaren Massen auf der Basis von
Komponente (A) enthaltend
   Polyorganosiloxan (I) mit mindestens zwei Alkenylgruppen pro Molekül und
   Katalysator (IV) und
Komponente (B) enthaltend
   Polyorganosiloxan (II) mit mindestens zwei Si-gebundenen Wasserstoffatomen pro Molekül und
   Additiv (III)
   ausgewählt aus der Gruppe der . organischen und siliciumorganischen Schwefelverbindungen
als Dichtungsmassen in Brennstoffzellen oder Brennstoffzellenstapeln, wobei die gasführenden Schichten nach außen abgedichtet werden und wobei es sich um Brennstoffzellen oder -stapeln handelt,die auf Basis von Wasserstoff und Luft oder Sauerstoff betrieben werden.

Komponente (A) enthält Polyorganosiloxan (I). Polyorganosiloxan (I) der erfindungsgemäßen Siliconkautschukmassen ist ein mindestens zwei Alkenylgruppen pro Molekül enthaltendes Polyorganosiloxan mit einer Viskosität bei 25°C im Bereich von vorzugsweise 0,5 bis 200 Pa.s, bevorzugt von 2 bis 100 Pa.s und besonders bevorzugt 5 bis 50 Pa.s. Polyorganosiloxan (I) wird in Mengen, die vorzugsweise zwischen 10-98 Gew.-% und bevorzugt zwischen 70-80 Gew.-% liegen, jeweils bezogen auf das Gesamtgewicht der Komponente A, eingesetzt.

Komponente (A) kann auch noch weitere Zusätze, wie unten aufgeführt, enthalten.

Komponente (B) enthält Polyorganosiloxan (II), ein Additiv (III) und kann auch noch Polyorganosiloxan (I) zusätzlich sowie weitere Zusätze, wie unten aufgeführt, enthalten.

Polyorganosiloxan (II) der erfindungsgemäßen Siliconkautschukmassen ist ein mindestens zwei Si-H Gruppen pro Molekül enthaltendes Polyorganosiloxan mit einer Viskosität bei 25°C im Bereich von vorzugsweise 10 bis 1000 mPa.s, besonders bevorzugt von 20 bis 100 mPa.s.

Das Polyorganosiloxan (I) ist vorzugsweise aufgebaut aus Einheiten der Formel

RₐR¹ _{b}SiO_{(4-a-b)/2},

wobei R einen Alkenylrest bedeutet,
R¹ einen monovalenten, gegebenenfalls substituierten, Kohlenwasserstoffrest mit 1 bis 10 Kohlenstoffatom(en) je Rest bedeutet,
a 0, 1 oder 2 und b 0, 1, 2 oder 3 ist,
mit der Maßgabe, daß mindestens zwei Reste R in jedem Molekül vorhanden sind und die Summe (a+b) < 4 ist.

Als Alkenylreste R können sämtliche einer Hydrosilylierungsreaktion mit einem SiH-funktionellen Vernetzungsmittel zugänglichen Alkenylreste gewählt werden. Vorzugsweise werden Alkenylreste mit 2 bis 6 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl- und Cyclohexenylrest, vorzugsweise Vinyl- und Allylrest, verwendet.

R¹ stellt einen substituierten oder nichtsubstituierten, aliphatisch gesättigten oder aromatischen, monovalenten Kohlenwasserstoffrest mit 1 bis 10 Kohlenstoffatomen, vorzugsweise 1 bis 6 Kohlenstoffatomen, dar. Beispiele hierfür sind Alkylreste, wie vorzugsweise der Methyl-, Ethyl-, Propyl-, Butyl- und Hexylrest, Cycloalkylreste, wie der Cyclopentyl-, Cyclohexyl- und Cycloheptylrest; Aryl- und Alkarylreste, wie der Phenyl-, Tolyl-, Xylyl-, Mesityl-, Benzyl-, beta-Phenylethyl- und Naphthylrest, oder halogensubstituierte Reste, wie 3,3,3-Trifluorpropylreste, o-, p- und m-Chlorphenylreste, Bromtolyl- und beta-Cyanethylrest. Bevorzugt ist der Methylrest.

Die Alkenylgruppen können in jeder Position der Polymerkette, insbesondere an den endständigen Siliciumatomen, gebunden sein.

Polyorganosiloxan (I) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane kann linear oder auch verzweigt sein. Verzweigte Polyorganosiloxane enthalten neben monofunktionellen Einheiten, wie RR¹₂SiO_{1/2} und R¹₃SiO_{1/2}, und difunktionellen Einheiten, wie R¹₂SiO_{2/2} und RR¹SiO_{2/2}, auch trifunktionelle Einheiten, wie R¹SiO_{3/2} und RSiO_{3/2}, und/oder tetrafunktionelle Einheiten der Formel SiO_{4/2}, wobei R und R¹ die oben dafür angegebene Bedeutung haben. Der Gehalt an diesen zu verzweigten Polyorganosiloxanen führenden tri- und/oder tetrafunktionellen Einheiten sollte 20 Mol-% nicht wesentlich überschreiten. Das Alkenylgruppen enthaltende Polyorganosiloxan kann auch Einheiten der allgemeinen Formel -OSi(R²R³)R⁴Si(R²R³)Oenthalten, wobei sowohl R² als auch R³ die vorstehend für R und R¹ angegebene Bedeutung haben und R⁴ einen bivalenten organischen Rest, wie Ethylen, Propylen, Phenylen, Diphenylen oder Polyoxymethylen, bezeichnet. Derartige Einheiten können bis zu einem Anteil von 50 Mol-% im Polyorganosiloxan (I) enthalten sein.

Besonders bevorzugt ist die Verwendung von Vinylgruppen enthaltender Polydimethylsiloxane der Formel

(ViMe₂SiO_{1/2})₂(ViMeSiO)ₐ(Me₂SiO)_{b}

wobei Vi ein Vinylrest, Me ein Methylrest,
a null oder eine nichtnegative ganze Zahl und b eine nichtnegative ganze Zahl ist und folgende Relationen erfüllt werden: 50<(a+b)<2200, vorzugsweise 200<(a+b)<1000.

Als Vernetzer wird Polyorganosiloxan (II) bei der Additionsvernetzung der erfindungsgemäßen Siliconkautschukmasse eingesetzt, das vorzugsweise ein SiH-funktionelles Polyorganosiloxan ist, das aufgebaut ist aus Einheiten der nachfolgenden Formel

H_{c}R¹ _{d}SiO_{(4-c-d)/2},

wobei c 0, 1 oder 2 ist, d 0, 1, 2 oder 3 ist, mit der Maßgabe, daß die Summe (c+d) < 4 ist und daß mindestens zwei siliciumgebundene Wasserstoffatome pro Molekül vorhanden sind und R¹ die oben dafür angegebene Bedeutung hat.

Bevorzugt ist die Verwendung eines drei oder mehr SiH-Bindungen pro Molekül enthaltenden Polyorganosiloxans. Bei Verwendung eines nur zwei SiH-Bindungen pro Molekül aufweisenden Polyorganosiloxans (II) enthält das Alkenylgruppen enthaltende Polyorganosiloxan (I) vorzugsweise mindestens drei Alkenylgruppen pro Molekül.

Das Polyorganosiloxan (II) wird als Vernetzer eingesetzt. Der Wasserstoffgehalt des Vernetzers, welcher sich ausschließlich auf die direkt an Siliciumatome gebundenen Wasserstoffatome bezieht, liegt im Bereich von 0,002 bis 1,7 Gew.-% Wasserstoff, vorzugsweise zwischen 0,1 und 1,0 Gew.-% Wasserstoff.

Das Polyorganosiloxan (II) enthält vorzugsweise mindestens drei und vorzugsweise höchstens 300 Siliciumatome pro Molekül. Besonders bevorzugt ist die Verwendung von SiH-Vernetzern, die zwischen 4 und 100 Siliciumatome pro Molekül enthalten.

Die Struktur des Polyorganosiloxans (II) kann linear, verzweigt, cyclisch oder netzwerkartig sein. Lineare und cyclische Polyorganosiloxane (II) sind aus Einheiten der Formel HR¹₂SiO_{1/2}, R¹₃SiO_{1/2}, HR¹SiO_{2/2} und R¹₂SiO_{2/2} zusammengesetzt, wobei R¹ die vorstehend dafür angegebene Bedeutung hat. Verzweigte und netzwerkartige Polyorganosiloxane (II) enthalten zusätzlich trifunktionelle Einheiten, wie HSiO_{3/2} und R¹SiO_{3/2}, und/oder tetrafunktionelle Einheiten der Formel SiO_{4/2}. Mit zunehmendem Gehalt an tri- und/oder tetrafunktionellen Einheiten weisen diese Vernetzungsmittel eine netzwerkartige, harzartige Struktur auf. Die im Polyorganosiloxan (II) enthaltenen organischen Reste R¹ werden üblicherweise so gewählt, daß diese mit den im Polyorganosiloxan (I) befindlichen organischen Resten verträglich sind, so daß die Bestandteile (I) und (II) mischbar sind.

Als Vernetzer können auch Kombinationen und Mischungen der hier beschriebenen Polyorganosiloxane (II) verwendet werden.

Bevorzugt werden als Polyorganosiloxane (II) solche der allgemeinen Formel

HₑR¹ ₃₋ₑSiO(SiR¹ ₂O)_{g}(SiHR¹O)ₕSiR¹ ₃₋ₑHₑ

wobei R¹ die oben dafür angegebene Bedeutung hat,
e 0, 1 oder 2 ist,
g 0 oder eine ganze Zahl von 1 bis 1000 und
h 0 oder eine ganze Zahl von 1 bis 200 ist,
mit der Maßgabe, dass mindestens 2 Si-gebundene Wasserstoffatome pro Molekül vorliegen, verwendet.

Das Polyorganosiloxan (II) ist vorzugsweise in einer solchen Menge in der härtbaren Siliconkautschukmasse enthalten, daß das Molverhältnis von SiH-Gruppen in (II) zu Alkenylgruppen in (I) vorzugsweise zwischen 0,5 und 5, bevorzugt zwischen 1,0 und 3,0, liegt.

Polyorganosiloxan (II) wird vorzugsweise in Mengen von 0,1 bis 30 Gew.-%, bevorzugt in Mengen von 10 bis 20 Gew.-%, jeweils bezogen auf das Gesamtgewicht der Komponente B, eingesetzt.

Der Katalysator (IV), der vorzugsweise in Komponente (A) enthalten ist, dient für die Additionsreaktion (Hydrosilylierung) zwischen den Alkenylgruppen des Polyorganosiloxans (I) und den siliciumgebundenen Wasserstoffatomen des Polyorganosiloxans (II). In der Literatur wurden zahlreiche geeignete Hydrosilylierungskatalysatoren (IV) beschrieben. Prinzipiell können alle üblicherweise in additionsvernetzenden Siliconkautschukmassen eingesetzten Hydrosilylierungskatalysatoren verwendet werden.

Als Hydrosilylierungskatalysator (IV) können Metalle, wie Platin, Rhodium, Palladium, Ruthenium und Iridium, vorzugsweise Platin, die gegebenenfalls auf feinteiligen Trägermaterialien fixiert sind, eingesetzt werden.

Vorzugsweise werden Platin und Platinverbindungen verwendet. Besonders bevorzugt werden solche Platinverbindungen, die in Polyorganosiloxanen löslich sind, verwendet. Als lösliche Platinverbindungen können beispielsweise die Platin-Olefin-Komplexe der Formeln (PtCl₂.Olefin)₂ und H(PtCl₃.Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂.C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Fein verteiltes Platin auf Trägermateralien wie Siliciumdioxid, Aluminiumoxid oder aktivierter Holz- bzw. Tierkohle, Platinhalogenide wie PtCl₄, Hexachloroplatinsäure und Na₂PtCl₄.nH₂O, Platin-Olefin Komplexe, z.B. solche mit Ethylen, Propylen oder Butadien, Platin-Alkohol Komplexe, Platin-Styrol Komplexe wie in US 4,394,317 beschrieben, Platin-Alkoholat Komplexe, Platin-Acetylacetonate, Reaktionsprodukte aus Chloroplatinsäure und Monoketonen, z.B. Cyclohexanon, Methylethylketon, Aceton, Methyl-n-propylketon, Diisobutylketon, Acetophenon und Mesityloxid, als auch Platin-Vinylsiloxan Komplexe - die Platin-Vinylsiloxan Komplexe wurden z.B. in US 3,715,334, US 3,775,452 und US 3,814,730 beschrieben -, wie Platin-divinyl-tetramethyldisiloxan Komplexe mit oder ohne nachweisbaren Mengen an anorganischem Halogen, in einer Menge, die ausreicht, um das Härten der Zusammensetzung bei einer Temperatur von vorzugsweise Umgebungstemperatur bis 250°C zu fördern, wobei das Organohydrogensiloxan (II) und der Hydrosilylierungskatalysator (IV) in verschiedenen Teilen der mehrteiligen härtbaren Zusammensetzung angeordnet sind. Besonders bevorzugt sind Komplexe des Platins mit Vinylsiloxanen, wie sym-Divinyltetramethyldisiloxan.

Der Hydrosilylierungskatalysator (IV) kann auch in mikroverkapselter Form eingesetzt werden, wobei der den Katalysator enthaltende und im Polyorganosiloxan unlösliche feinteilige Feststoff beispielsweise ein Thermoplast (Polyesterharze, Siliconharze) ist. Der Hydrosilylierungskatalysator kann auch in Form einer Einschlußverbindung, beispielsweise in einem Cyclodextrin, eingesetzt werden.

Die Menge des eingesetzten Hydrosilylierungskatalysators (IV) richtet sich nach der gewünschten Vernetzungsgeschwindigkeit sowie ökonomischen Gesichtspunkten. Bei Verwendung gebräuchlicher Platin-Katalysatoren liegt der Gehalt von Platin-Metall in der härtbaren Siliconkautschukmasse im Bereich von vorzugsweise 0,1 bis 500 Gew.-ppm (ppm = Teile pro 1 Million Teile), bevorzugt zwischen 10 und 100 Gew.-ppm Platin-Metall, jeweils bezogen auf das Gesamtgewicht der Masse. Ansonsten wird der Katalysator gegebenenfalls zusammen mit einem Inhibitor vorzugsweise in Mengen von 0,01 bis 5 Gew.-% eingesetzt.

Das Additiv (III) kann auch auf einen anorganischen Füllstoff, wie Kieselsäure, z.B. hochdisperses Siliciumdioxid, aufgebracht und/oder gebunden sein.
Beispiele für organische Schwefelverbindungen als Additiv (III) sind Thiole (Mercaptane), wie Alkylthiole, Arylthiole, Mercaptoheterocyclen, wie Mercaptoimidazole und Mercaptobenzimidazole, Keten-S,X-acetale, mit X bevorzugt gleich N oder S, Thioacetale, Sulfane (Thioether), Disulfane (Dithioether), Polysulfane, Thioamide, Thioharnstoffe, Thiurame (Thiurammono-, di- oder polysulfide, Bisthiocarbamoylmono-, dioder polysulfane), Thiuroniumsalze, Thiocarbamate, Dithiocarbamate und deren Zn-, Fe-, Ni-, Co- oder Cu-Salze, Thiocyanate, Isothiocyanate, Thiocarbonylverbindungen (wie z.B. Thioaldehyde, Thioketone, Thiolactone, Thiocarbonsäuren) und Thia-Heterocyclen (wie z.B. Thiophen, 1,2- oder 1,3-Dithiole bzw. 1,2- oder 1,3-Dithiol-thione, Thiazole, Mercaptothiazole, Mercaptothiadiazole, Benzo-dithiole bzw. Benzo-dithiol-thione, Benzthiazole, Mercaptobenzthiazole, Phenothiazine und Thianthrene).
Beispiele für siliciumorganische Schwefelverbindungen als Additiv (III) sind Organosiliciumverbindungen mit schwefelhaltigen funktionellen Gruppen, wie Silane mit schwefelhaltigen funktionellen Gruppen, z.B. ein Mercaptoalkylalkyl-alkoxysilan der allgemeinen Formel (4),

(4) (R⁵O)₃₋ₘR⁶ ₘSi-R⁷-SH

bevorzugt 3-Mercaptopropyltrimethoxysilan und 3-Mercaptopropyltriethoxysilan,
Bis-(trialkoxysilyl-alkyl)mono-, di- oder polysulfane der allgemeinen Formel (5),

(5) [(R⁸O)₃Si-R⁹-]₂-Sₙ

Thiocyanatoalkyltrialkoxysilane der allgemeinen Formel (6),

(6) (R¹⁰O)₃Si-R¹¹-SCN

und thiofunktionelle Siloxane, z.B. ein Copolymerisat aus Trimethylsiloxaneinheiten, Dimethylsiloxaneinheiten und Methylmercaptoalkylsiloxaneinheiten, wie Methyl-2-mercaptoethylsiloxaneinheiten und Methyl-3-mercaptopropylsiloxaneinheiten, sowie anorganische Füllstoffe, bevorzugt Kieselsäuren, z.B. hochdisperses Siliciumdioxid, auf den diese Organosiliciumverbindungen mit schwefelhaltigen funktionellen Gruppen aufgebracht, umgesetzt oder abgemischt wurden, vorzugsweise aufgebracht und/oder gebunden wurden.
Das Additiv (III) ist in mindestens einem Teil der mehrteiligen Zusammensetzung, bevorzugt dem H-Siloxan haltigen Teil enthalten.

R⁵ stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind Alkylreste, wie vorzugsweise der Methyl-, Ethyl-, Propyl-, Butyl- und Hexylrest; Cycloalkylreste, wie Cyclopentyl-, Cyclohexyl- und Cycloheptylrest.

R⁶ stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind Alkylreste, wie vorzugsweise der Methyl-, Ethyl-, Propyl-, Butyl- und Hexylreste; Cycloalkylreste, wie Cyclopentyl-, Cyclohexyl- und Cycloheptylrest; Aryl- und Alkarylreste, wie Phenyl-, Tolyl-, Xylyl-, Mesityl- und Benzylrest.

R⁷ stellt einen substituierten oder nichtsubstituierten, aliphatisch gesättigten, bivalenten Kohlenwasserstoffrest mit 1 bis 10 Kohlenstoffatomen, vorzugsweise 1 bis 6 Kohlenstoffatomen, dar. Beispiele hierfür sind Alkylenreste, wie Methylen-, Ethylen-, Propylen-, Butylen-, Hexylen- und Phenylenrest, besonders bevorzugt der Propylenrest.

R⁸ und R¹⁰ haben die Bedeutung von R⁵.
R⁹ und R¹¹ haben die Bedeutung von R⁷.
m ist 0, 1, 2 oder 3, bevorzugt 0.
n ist eine ganze Zahl von 1 bis 10, bevorzugt 2 oder 4.

Es können auch Gemische der Additive (III) eingesetzt werden.

Die Additive (III) oder ihre Gemische werden in Mengen von 0,0001 - 2 Gew.-%, bevorzugt 0,001 - 0,2 Gew.-%, besonders bevorzugt 0,005 - 0,15 Gew.-%, bezogen auf das Gesamtgewicht der Massen, eingesetzt.

In einer der Komponenten A oder B können auch die folgenden Zusätze enthalten sein.

Während die Bestandteile (I) bis (IV) notwendige Bestandteile der erfindungsgemäßen Siliconkautschukmasse sind, können wahlweise weitere Zusätze zu einem Anteil von bis zu 60 Gew.-%, vorzugsweise zwischen 10 und 40 Gew.-%, in der Siliconkautschukmasse enthalten sein. Diese Zusätze können z.B. Füllstoffe, Haftvermittler, Inhibitoren, Metallstäube, Fasern, Pigmente, Farbstoffe, Weichmacher usw. sein.

Beispiele für Füllstoffe sind verstärkende Füllstoffe, eines verstärkenden anorganischen, bevorzugt silikatischen, Füllstoffs, wie z.B. hochdisperses Siliciumdioxid (Kieselsäure) mit spezifischen Oberflächen von 50 - 500 m²/g, bevorzugt 150-300 m²/g, die auch oberflächenmodifiziert sein können. Diese können hergestellt werden z.B. durch Ausfällung aus Lösungen von Silikaten mit anorganischen Säuren und durch hydrothermalen Aufschluß, durch hydrolytische und bzw. oder oxidative Hochtemperaturumsetzung von flüchtigen Siliciumhalogeniden oder durch ein Lichtbogenverfahren. Diese Kieselsäuren können gegebenenfalls auch als Mischoxide oder Oxidgemische mit den Oxiden der Metalle Aluminium, Magnesium, Calcium, Barium, Zink, Zirkon und/oder Titan vorliegen. Des weiteren können nicht verstärkende Füllstoffe, also Füllstoffe mit einer spezifischen Oberfläche nach BET von weniger als 50 m²/g, wie Quarzmehl, Diatomeenerde, Calciumsilikat, Zirkoniumsilikat, Zeolithe, Metalloxide, wie Eisenoxid, Zinkoxid, Titandioxid, Aluminiumoxid, Metallcarbonate, wie Calciumcarbonat, Magnesiumcarbonat, Zinkcarbonat, Metallsulfate, Glimmer, Siloxanharze, Tone, Lithophone, Graphit und Kreide verwendet werden. Die genannten Füllstoffe können hydrophobiert sein. Synthetische Silikate, natürliche Silikate, Glasfasern und Glasfasererzeugnisse wie Matten, Stränge, Gewebe, Gelege und dergleichen sowie Mikroglaskugeln können verwendet werden. Vorzugsweise werden 10 bis 60%, bezogen auf das Gewicht der Massen, an Füllstoff zugegeben.

Ruß kann zusätzlich in den erfindungsgemäßen Kautschukmassen zugegen sein, nicht nur zur Grau- oder Schwarzfärbung der Vulkanisate, sondern auch zur Erzielung von besonderen, wertvollen Vulkanisationseigenschaften, wobei die bekannten Gummiruße vorgezogen werden. Der Ruß wird vorzugsweise in Mengen von 0 bis 35 Gewichtsteilen, bezogen auf 100 Gewichtsteile Kautschuk, in mindestens einem Teil der mehrteiligen Zusammensetzung eingesetzt. Eine untere Grenze mit der Zahl Null bedeutet im Rahmen der vorliegenden Erfindung, daß der Mischungsbestandteil in der Kautschukmischung vorhanden sein kann, aber nicht muß. Wenn Ruß in einer Mischung zugegen ist, ist die untere Grenze praktisch bei 0,1 Gewichtsteilen anzusetzen.

Beispiele für Weichmacher sind bei Raumtemperatur flüssige, durch Triorganosiloxygruppen endblockierte Diorganopolysioxane, wie durch Trimethylsiloxygruppen endblockierte Dimethylpolysiloxane mit einer Viskosität von 10 bis 10 000 mPa.s bei 25°C .

Insbesondere können harzartige Polyorganosiloxane, die im wesentlichen aus Einheiten der Formeln R¹²₃SiO_{1/2}, R¹²SiO_{3/2} und/oder SiO_{4/2}, ggf. auch R¹²₂SiO_{2/2}, bestehen, bis zu einem Anteil von 60 Gew.-%, vorzugsweise bis zu 40 Gew.-%, bezogen auf das Gesamtgewicht der Siliconkautschukmassen, enthalten sein. Das Molverhältnis zwischen monofunktionellen und trioder teträfunktionellen Einheiten dieser harzartigen Polyorganosiloxane liegt vorzugsweise im Bereich von 0,5 : 1 bis 1,5 : 1. Es können auch funktionelle Gruppen, insbesondere Alkenylgruppen, in Form von R¹³R¹²₂SiO_{1/2}- und/oder R¹³R¹²SiO_{2/2}-Einheiten, enthalten sein.

R¹² stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind Alkylreste, wie der Methyl-, Ethyl-, Propyl-, Butyl- und Hexylrest; Cycloalkylreste, wie Cyclopentyl-, Cyclohexyl- und Cycloheptylrest; Aryl- und Alkarylreste, wie Phenyl-, Tolyl-, Xylyl-, Mesityl-, Benzyl-, beta-Phenylethyl- und Naphthylrest, und halogensubstituierte Reste, wie 3,3,3-Trifluorpropyl-, o-, p- und m-Chlorphenyl-, Bromtolyl- und beta-Cyanethylrest.

R¹³ stellt einen Alkenylrest dar. Als Alkenylreste können sämtliche einer Hydrosilylierungsreaktion mit einem SiH-funktionellen Vernetzungsmittel zugängliche Alkenylreste gewählt werden. Vorzugsweise werden Alkenylreste mit 2 bis 6 Kohlenstoffatomen, wie der Vinyl-, Allyl-, Methallyl-, 1-Propenyl-, 5-Hexenyl-, Ethinyl-, Butadienyl-, Hexadienyl-, Cyclopentenyl-, Cyclopentadienyl-rest, Cyclohexenyl, bevorzugt Vinyl- und Allylrest, verwendet.

Enthalten sein können insbesondere Zusätze, die der gezielten Einstellung der Verarbeitungszeit und Vernetzungsgeschwindigkeit der härtbaren Siliconkautschukmasse dienen. Diese an sich bekannten Inhibitoren und Stabilisatoren sind beispielsweise: acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siloxanöle mit Vinyldimethylsiloxy-Endgruppen, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Benzotriazol, organische Sulfoxide, organische Amine und Amide, Phosphane, Phosphite, Nitrile, Diaziridine und Oxime. Vorzugsweise können Siloxane, besonders bevorzugt 2,3-Divinyl-1,1,3,3-tetramethyldisiloxan und Tetramethyl-tetravinylcyclotetrasiloxan verwendet werden.

Die Herstellung der erfindungsgemäßen Siliconkautschukmassen erfolgt vorzugsweise, indem in einem ersten Schritt der Füllstoff mit dem Alkenylgruppen enthaltenden Polyorganosiloxan (I) zu einem einheitlichen Gemisch vermischt wird. Die Einarbeitung des Füllstoffs in das Polyorganosiloxan (I) erfolgt in einem geeigneten Mischer, z.B. einem Kneter.

Die Komponenten (A) und (B) werden in einem Gewichtsverhältnis von vorzugsweise 10:1 bis 1:0,5, bevorzugt 1:1 verwendet.

Die Vulkanisation der Massen erfolgt bei einem Druck von vorzugsweise dem Druck der umgebenden Atmosphäre (1 bar) bis 2000 bar, bevorzugt 1 bis 200 bar, besonders bevorzugt 1 bis 50 bar und bei einer Temperatur von vorzugsweise Raumtemperatur (20°C) bis 250°C, bevorzugt 70°C bis 180°C, insbesondere 90°C bis 150°C.

Die erfindungsgemäßen Massen werden verwendet zur Herstellung von Abdichtungen von Brennstoffzellen und Stacks aus Brennstoffzellen-Einheiten, speziell im Bereich der Abdichtung zwischen Bipolarplatte und Membranen-Elektroden-Einheit (MEA) bzw. Gasdiffusionsschicht.

Die Herstellung der Dichtungen erfolgt vorzugsweise nach den zur Verarbeitung von 2-Komponentensiliconkautschukmassen üblichen Verfahren, wie Gießen, Tauchen, Aufdosieren, Einspritzen, Spritzgießen, Spritzpressen, Formpressen, wobei Gießen, Einspritzen und Spritzgießen bevorzugt sind.

Charakteristisch für die beschriebenen additionsvernetzenden Siliconkautschuke ist, daß im Unterschied zur Peroxidvernetzung keine Vernetzerspaltprodukte freigesetzt werden. Additionsvernetzende Siliconkautschuke weisen zudem im Vergleich zu anderen Elastomeren wie beispielsweise Polyolefinen eine niedrige Viskosität auf, was z.B. für die Abdichtung vorteilhaft ist.
Diese günstige Konsistenz und das Vernetzungsprinzip führen zu zahlreichen Verarbeitungsvorteilen, insbesondere bei Prozessen mit hohen Taktraten. Ein weiterer Vorteil der erfindungsgemäßen Massen ist eine Verarbeitung ohne Nachbehandlung, z.B. ohne Nachheizen (Tempern), was wesentlich für eine automatisierte Produktion ist. Ein weiterer Vorteil der erfindungsgemäßen Massen ist, dass die Elastomere einen niedrigen Druckverformungsrest aufweisen, was für eine Vielzahl von dichtungstechnischen Anwendungen wichtig ist. Die erfindungsgemäßen, für die Abdichtung von Brennstoffzellen verwendeten Silicondichtmassen weisen einen Druckverformungsrest von vorzugsweise kleiner 10, besonders bevorzugt kleiner 5 auf. Ein wesentlicher Vorteil ist, dass die aus den erfindungsgemäßen Massen erhaltenen Elastomere unter den Betriebsbedingungen von Brennstoffzellen degradationsstabil sind, d.h. insbesondere beständig gegenüber Wasserstoff und Luft bzw. Sauerstoff, die mit Wasser befeuchtet sind, sind. Aus den genannten Gründen sind die erfindungsgemäßen Massen besonders interessant, da durch die schwefelhaltigen Additive (III) ohne wesentliche Beeinflussung der übrigen mechanischen Eigenschaften und/oder des Vernetzungsverhaltens die Degradationsneigung größtenteils verringert sowie der Druckverformungsrest deutlich verbessert wird. Durch die am Füllstoff gebundenen schwefelhaltigen Gruppen der Additive (III) wird eine Beeinflussung der katalytisch aktiven Schicht in den Brennstoffzellen vermieden.

### Beispiele:

### Beispiel 1: Herstellung eines mit Organoschwefelverbindungen modifizierten Füllstoffes

Zu 100 g pyrogenen Siliciumdioxids mit einer spezifischen Oberfläche nach BET von 300 m²/g, erhältlich bei der Wacker-Chemie unter dem Namen "Wacker HDK T30", werden bei Raumtemperatur und Normaldruck unter Rühren feinstverteilt 10 g Wasser und anschließend feinstverteilt 12,24 g 3-Mercaptopropyltrimethoxysilan, erhältlich bei der Wacker-Chemie unter dem Namen "Wacker Silan GF 70", eingemischt. Anschließend wird 1 Stunde bei 80°C getempert. Nach der Reinigung von Reaktionsnebenprodukten unter vermindertem Druck werden 106,1 g eines weißen Pulvers erhalten.

### Beispiel 2: Herstellung eines Batches zur Verbesserung der Beständigkeit gegenüber Wasserstoff/Luft

In einem Kneter werden 43,3 Gew.-Teile vinylendgestopptes Polydimethylsiloxan mit einer Viskosität von 20 Pa.s bei 25°C mit 20 Gew.-Teilen eines mit Hexamethyldisilazan oberflächenmodifizierten pyrogen hergestellten Siliciumdioxids mit einer spezifischen Oberfläche von 300 m²/g nach BET gemischt und zu einer homogenen Masse verarbeitet. Zu dieser Mischung werden 10 Gew.-Teile eines modifizierten Füllstoffs nach Beispiel 1 gegeben und erneut 0,5 Stunden bei 120°C homogenisiert. Zum Abschluß werden 26,7 Gew.-Teile vinylendgestopptes Polydimethylsiloxan mit einer Viskosität von 20 Pa.s bei 25°C eingemischt.

### Beispiel 3: Herstellung der beiden Kautschuk-Grundkomponenten

### Herstellung der A-Komponente:

In einem Kneter werden 82 Gew.-Teile vinylendgestopptes Polydimethylsiloxan mit einer Viskosität von 20 Pa.s bei 25°C mit 33 Gew.-Teilen oberflächenmodifizierten pyrogen hergestellten Siliciumdioxid mit einer spezifischen Oberfläche von 300 m²/g nach BET gemischt und zu einer homogenen Masse verarbeitet. Zu 100 Gew.-Teilen dieser Siliconbasismischung werden 0,19 g eines Platinkatalysators, bestehend aus 97 Gew.-Teilen eines Polydimethylsiloxans und 3 Gew.-Teilen eines Platin-divinyl-tetramethyldisiloxan-Komplexes, und 0,07 Gew.-Teile Ethinylcyclohexanol als Inhibitor gegeben und in einem Kneter homogenisiert.

### Herstellung der B-Komponente:

In einem Kneter werden 82 Gew.-Teile vinylendgestopptes Polydimethylsiloxan mit einer Viskosität von 20 Pa.s bei 25°C mit 33 Gew.-Teilen oberflächenmodifiziertes pyrogen hergestelltes Siliciumdioxid mit einer spezifischen Oberfläche von 300 m²/g nach BET gemischt und zu einer homogenen Masse verarbeitet. Zu 100 Gew.-Teilen dieser Siliconbasismischung werden 4 Gew.-Teile eines Mischpolymerisats aus Dimethylsiloxan-, Hydrogenmethylsiloxan- und Trimethylsiloxaneinheiten mit 0,37 Gew.-% Si-gebundenem Wasserstoff und 0,03 Gew.-Teile Ethinylcyclohexanol als Inhibitor gegeben und in einem Kneter homogenisiert.

### Beispiel 4: Vergleichsversuch

Die erhaltenen härtbaren Silicongrundmassen A und B aus Beispiel 3 werden im Verhältnis 1:1 gemischt. Die Mischung wird in eine Form gegeben, deren Formkörper eine 0,5 mm dicke Folie mit einem Dichtungsrand ergibt, und bei 165°C für 30 min. vulkanisiert.

Die Untersuchung der Degradation wurde mit Hilfe einer Meßvorrichtung durchgeführt, bei der Folien der Siliconvulkanisate in eine Vorrichtung gespannt wurden, bei der auf der einen Seite der Folie temperierte und definiert befeuchtete Luft, auf der anderen Seite temperierter, befeuchteter Wasserstoff mit definiertem Volumenstrom vorbei geleitet wurde. Die Beurteilung der auftretenden Degradation erfolgte optisch. Die Ergebnisse sind in der nachstehenden Tabelle 1 zusammengefasst.

### Beispiel 5:

Zu 100 Gew.-Teilen der B-Komponente nach Beispiel 3 werden 2 Gew.-Teil des Batches nach Beispiel 2 zugemischt, entsprechend ca. 0,5 Gew.-Teilen des modifizierten Füllstoffs nach Beispiel 1, und mit der A-Komponente wie in Beispiel 4 vulkanisiert.
Die Untersuchung der Degradation erfolgte wie in Beispiel 4 beschrieben. Die Ergebnisse sind in der nachstehenden Tabelle 1 zusammengefaßt.

### Beispiel 6:

Zu 100 Gew.-Teilen der B-Komponente nach Beispiel 3 werden 4 Gew.-Teile des Batches nach Beispiel 2 zugemischt und mit der A-Komponente wie in Beispiel 4 vulkanisiert.
Die Untersuchung der Degradation erfolgte wie in Beispiel 4 beschrieben. Die Ergebnisse sind in der nachstehenden Tabelle 1 zusammengefaßt.

**Tabelle:**

| Untersuchung der Degradation | | |
|---|---|---|
| Material | Betriebsdauer | Ergebnis |
| additionsvernetzender Siliconkautschuk | 460 h | 4 |
| ohne Additiv (III) (Vergleichsversuch) | 460 h | 5 |
| Beispiel 5 | 1000 h | 2 |
| Beispiel 6 | 872 h | 1-2 |
| | 872 h | 1 |
| Trübung: 1 keine, 2 leicht, 3 mittel, 4 stark, 5 sehr stark | | |

Die mit dem erfindungsgemäßen Additiv stabilisierten additionsvernetzenden Siliconkautschuke zeigen keine Trübung (nach 872 h) oder nur eine leichte Trübung (nach 1000 h), sind also degradationsstabil, im Gegensatz zu dem additionsvernetzenden Siliconkautschuk ohne Additiv der schon nach 460 h eine starke bis sehr starke Trübung aufweist.

## Patentansprüche

1. Verwendung von zu Elastomeren vernetzbaren Massen auf der Basis von
Komponente (A) enthaltend
Polyorganosiloxan (I) mit mindestens zwei Alkenylgruppen pro Molekül und
Katalysator (IV) und
Komponente (B) enthaltend
Polyorganosiloxan (II) mit mindestens zwei Si-gebundenen Wasserstoffatomen pro Molekül und
Additiv (III) ausgewählt aus der Gruppe bestehend aus organischen oder siliciumorganischen Schwefelverbindungen,
als Dichtungsmasse in Brennstoffzellen oder Brennstoffzellenstapeln, wobei die gasführenden Schichten nach außen abgedichtet werden und wobei es sich um Brennstoffzellen oder -stapeln handelt, die auf Basis von Wasserstoff und Luft oder Sauerstoff betrieben werden.

2. Verwendung nach Anspruch 1, **dadurch gekennzeichnet, dass** Komponente (B) noch zusätzlich Polyorganosiloxan (I) enthält.

3. Verwendung nach Anspruch 1 oder 2, **dadurch gekennzeichnet, dass** das Additiv (III) auf einen anorganischen Füllstoff aufgebracht und/oder gebunden ist.

4. Verwendung nach Anspruch 1, 2 oder 3, **dadurch gekennzeichnet, dass** das Additiv (III) eine siliciumorganische Schwefelverbindung ist.

5. Verwendung nach Anspruch 4, **dadurch gekennzeichnet, dass** als siliciumorganische Schwefelverbindung
3-Mercaptopropyltrimethoxysilan,
3-Mercaptopropyltriethoxysilan oder Copolymerisat aus Dimethylsiloxaneinheiten, Methyl-3-mercaptoproylsiloxaneinheiten und Trimethylsiloxaneinheiten eingesetzt wird.

6. Verwendung nach einem der Ansprüche 1 bis 5, **dadurch gekennzeichnet, dass** das Additiv (III) in Mengen von 0,0001 bis 2 Gew.-%, bezogen auf das Gesamtgewicht der Masse, enthalten ist.

7. Verwendung nach einem der Ansprüche 1 bis 6, **dadurch gekennzeichnet, dass** Komponente (A) mit Komponente (B) vermischt wird.

8. Verwendung nach einem der Ansprüche 1 bis 7, **dadurch gekennzeichnet, dass** die Dichtungen durch Gießen, Einspritzen oder Spritzgießen hergestellt werden.

## Claims

1. Use of compositions, which can be crosslinked to give elastomers, based on
component (A) comprising
polyorganosiloxane (I) having at least two alkenyl groups per molecule and
catalyst (IV) and
component (B) comprising
polyorganosiloxane (II) having at least two Si-bonded hydrogen atoms per molecule and
additive (III) chosen from the group consisting of organic or organosilicon sulphur compounds,
as sealing composition in fuel cells or fuel cell stacks, the gas-bearing layers being sealed off from the outside and the fuel cells or fuel cell stacks being ones which are operated on the basis of hydrogen and air or oxygen.

2. Use according to Claim 1, **characterized in that** component (B) also additionally comprises polyorganosiloxane (I).

3. Use according to Claim 1 or 2, **characterized in that** the additive (III) is applied and/or bonded to an inorganic filler.

4. Use according to Claim 1, 2 or 3, **characterized in that** the additive (III) is an organosilicon sulphur compound.

5. Use according to Claim 4, **characterized in that** the organosilicon sulphur compound used is
3-mercaptopropyltrimethoxysilane,
3-mercaptopropyltriethoxysilane or
copolymer of dimethylsiloxane units, methyl-3-mercaptopropylsiloxane units and trimethylsiloxane units.

6. Use according to one of Claims 1 to 5, **characterized in that** the additive (III) is present in amounts of from 0.0001 to 2% by weight, based on the total weight of the composition.

7. Use according to one of Claims 1 to 6, **characterized in that** component (A) is mixed with component (B).

8. Use according to one of Claims 1 to 7, **characterized in that** the seals are prepared by casting, injection or injection moulding.

## Revendications

1. Utilisation de masses réticulables en élastomères, à base
du composant (A) contenant
un polyorganosiloxane (I) présentant au moins deux groupes alcényle par molécule et
un catalyseur (IV) et
du composant (B) contenant
un polyorganosiloxane (II) présentant au moins deux atomes d'hydrogène liés par Si par molécule et
un additif (III) choisi dans le groupe constitué par les composés organiques ou organosiliciés du soufre
comme masse d'étanchéité dans des cellules ou des piles à combustible, les couches guidant les gaz étant étanchéifiées vers l'extérieur et les cellules ou piles à combustible étant des cellules ou des piles qui sont opérées à base d'hydrogène et d'air ou d'oxygène.

2. Utilisation selon la revendication 1, **caractérisée en ce que** le composant (B) contient en outre encore un polyorganosiloxane (I).

3. Utilisation selon la revendication 1 ou 2, **caractérisée en ce que** l'additif (III) est appliqué et/ou lié sur une charge inorganique.

4. Utilisation selon la revendication 1, 2 ou 3, **caractérisée en ce que** l'additif (III) est un composé organosilicié du soufre.

5. Utilisation selon la revendication 4, **caractérisée en ce qu'**on utilise, comme composé organosilicié du soufre, le 3-mercaptopropyltriméthoxysilane, le 3-mercaptopropyltriéthoxysilane ou un copolymère constitué par des unités diméthylsiloxane, des unités méthyl-3-mercaptopropylsiloxane et des unités triméthylsiloxane.

6. Utilisation selon l'une quelconque des revendications 1 à 5, **caractérisée en ce que** l'additif (III) est contenu en des quantités de 0,0001 à 2% en poids par rapport au poids total de la masse.

7. Utilisation selon l'une quelconque des revendications 1 à 6, **caractérisée en ce que** le composant (A) est mélangé avec le composant (B).

8. Utilisation selon l'une quelconque des revendications 1 à 7, **caractérisée en ce que** les joints sont réalisés par coulage, injection ou moulage par injection.
